# EUROPEAN PATENT APPLICATION

(11) **EP 2 701 097 A2**
(43) Date of publication of application: **26.02.2014**
(21) Application number: 13181419.6
(22) Date of filing: 22.08.2013
(51) Int. Cl.: G06K 9/20

(54) **Method and device for authenticating a user**

(30) Priority: 24.08.2012 GB 201215111
(71) Applicant: Vodafone IP Licensing Limited, The Connection Newbury Berkshire RG14 2FN (GB)
(72) Inventor: Knight, Joshua, Newbury, Berkshire RG14 2FN (GB)
(74) Representative: Ellis, Lyle John

(57) **Abstract**

The application describes a method of deriving authentication data. The method comprises selecting an illumination configuration from a plurality of predetermined illumination configurations; illuminating at least a part of the user in a manner corresponding to the selected illumination configuration; capturing an image of at least a portion of the illuminated user; and determining whether to authenticate the user based on the captured image.

## Description

### Field of the Invention

The present invention relates to a method of deriving authentication data that may be used in the authentication of user. The invention also relates to a method of authenticating a user, for example by using authentication data derived from captured images of the user. The invention also relates to a device, such as a mobile phone, configured to authenticate a user and thereby unlock the device, for example.

### Background to the Invention

Mobile device security is gaining significant importance, in part due to the growing need for data to be securely protected on personal or corporate devices. As mobile phones and tablet computers store more personal photographs, sensitive e-mails, important contacts lists, and other day-to-day information, so too does the need for security increase.

Whilst there are a number of authentication methods currently available for mobile devices, biometrics remain relatively simplistic when compared to more secure lock features, such as PIN or password entry. However, whilst biometrics are a suitably robust form of protection for some scenarios (such as passport border control), biometrics remain in their infancy due to the hardware limitations of mobile devices. In particular, recent biometric access methods, such as Google Face Unlock (available on Android 4.0 "Ice Cream Sandwich" and above), have been shown to be relatively easily circumvented using simple exploits such as scanning a photograph of the user's face.

Methods of biometric authentication may be improved by obtaining 3-D images of the user. US 2005/0238210 A1 discloses a method and apparatus in which an identity of a person is verified by a handheld device. The device uses two imaging devices that operate simultaneously to obtain 3-D information about the user.

There is nonetheless a need in the art to provide an improved biometric authentication method, which may use existing hardware in a new way to avoid existing circumvention techniques. The present invention seeks to provide such a method, in order to address the problems encountered in the state of the art.

### Summary of the Invention

In accordance with a first aspect of the present invention, there is provided a method of deriving authentication data. The method comprises selecting an illumination configuration from a plurality of predetermined illumination configurations; illuminating at least a part of the user in a manner corresponding to the selected illumination configuration; capturing an image of at least a portion of the illuminated user; and determining whether to authenticate the user based on the captured image..

This aspect of the invention typically corresponds to an initial "learning" phase, during which a device may derive and store authentication data. Once authentication data has been derived, it may be stored for future use (for example, the authentication data and/or the captured images can be stored for use in future user authentication methods, for example using the methods described below).

An illumination configuration may be any pattern or arrangement of light, and may depend on its colour, intensity, opaqueness, and any other properties that, when modified, effectively illuminate the user in a particular and preferably reproducible fashion. Thus, for example, in a first illumination configuration, a user may be illuminated by different emitters located at different angular positions relative to the direction in which the user is facing. Continuing with the example, in a second illumination configuration, the same emitters may illuminate the user with a different intensity to that used in the first illumination configuration, or else a fewer/greater number of emitters may be used than those employed for the first illumination configuration. Thus, the user is illuminated in a different fashion according to each individual illumination configuration. An illumination configuration may also be a function of the number of light sources trained on the portion of the user at any given time. For example, two light sources illuminating a user over a first time period will result in a first illumination configuration, whilst the same two light sources individually illuminating the user over two separate time periods will result in the user being illuminated with two different illumination configurations. In some embodiments, instead of light, sound waves may be used to "illuminate" the user.

The portion of the user illuminated may be any physical feature of the user, for example a user's mouth, nose, hand, ear, etc. Preferably, the portion of the user that is illuminated is their face.

The sensor may be a video camera or a photosensitive detector arranged to capture any portion of the user illuminated according to any particular illumination configuration. If sound waves are used, the sensor is preferably a microphone.

Once the images are captured by the sensor, authentication data may be derived or otherwise obtained from each image. For example, the authentication data may be data points that are taken at predetermined coordinate locations on the images. The data points may be a function of the intensity of the light received on the sensor at that particular point. In other embodiments, the images of the user may be combined to allow for the creation of a three-dimensional image, data or measurements of the user, and authentication data based on this three-dimensional image may then be taken (e.g. at specific nodes on the image). These data points may correspond to physical measures of the user, especially those measurable by using differently illuminated images, for example the distance separating the eyes of the user, the height of the nose, the distance between the corners of the mouth, etc.

Using this method of the invention, a set of authentication data may be obtained for a user. Each image of the user will be obtained on the basis of a different illumination configuration, and therefore the authentication data that can be derived from each image will provide different information. Furthermore, the combination of differently illuminated images may provide authentication data preferably unique to one user. Such authentication data can be used to authenticate the user according to other embodiments of the invention (e.g. see below).

For example, in a second aspect of the invention, there is provided a method of authenticating a user. The method comprises selecting an illumination configuration from a plurality of pre-stored illumination configurations. At least a portion of the user is then illuminated with the selected illumination configuration. A sensor captures an image of the at least a portion of the user illuminated with the selected illumination configuration. The method then determines whether to authenticate the user based on the captured image.

This method is advantageous in that a particular illumination configuration may be selected at random from a pool of pre-stored illumination configurations. Thus, it is more difficult to circumvent a biometric unlock feature on a mobile device by using a photograph of the user. This is because the photograph is an image of the user illuminated using a particular illumination configuration. By selecting an illumination configuration (for example, at random) from a plurality pre-stored illumination configurations, a person wishing to gain unauthorised access to the device is unlikely to succeed given that the illumination configuration chosen by the device is unlikely to be the one that led to the photo. This is particularly true if the device is able to select an illumination configuration from a large pool of pre-stored illumination configurations.

For example, the randomly selected illumination configuration may be illumination from below. Therefore, presenting an image of the user obtained using different illumination should not result in successful authentication.

Alternatively, instead of selecting a particular illumination configuration, all stored illumination configurations may be used to illuminate the user.

In a third aspect of the present invention, there is provided a method of authenticating a user. The method comprises illuminating at least a portion of the user with a first illumination configuration. A sensor captures a first image of the at least a portion of the user illuminated with the first illumination configuration. The at least a portion of the user is then illuminated with a second illumination configuration different to the first illumination configuration. The sensor then captures a second image of the at least a portion of the user illuminated with the second illumination configuration. The method then determines whether to authenticate the user based on the first and second captured images. This aspect of the invention generally relates to an "authentication" phase which takes place after the "learning" phase.

By capturing a pair of images of the user illuminated with two different illumination configurations, the invention allows for more secure authentication of the user. For example, whereas in the prior art one could present a photograph of the user in order to circumvent a biometric unlock mechanism on the device, the present invention may use data from two different images of the user to determine whether to authenticate the user, both images having been captured with the same sensor. These added data provide for a safer and more secure authentication method. It should be noted that more than two illumination configurations can be used, and, the greater the number of different illumination configurations used, the more likely it is that the user will be accurately and correctly authenticated.

Measured values corresponding to physical measures of the at least a portion of the user may be derived or otherwise obtained from the captured first and second images. The step of determining whether to authenticate the user may comprise comparing the derived measured values to stored measured values. In one embodiment, the first and second captured images may be combined to allow for a three-dimensional image of the user to be created, using only a single sensor. From this three-dimensional image, measured values relating to particular physical measures of the user may be derived. The stored measured values may be the authentication data that is derived according to the first aspect of the invention, described above. Thus, the method may then compare the derived measured values with corresponding values that have been obtained during a "learning" phase of the mechanism.

The derived measured values may be modified as a function of ambient light conditions. Ambient light conditions tend to affect the illumination configuration that a user is exposed to. Therefore, for example, where authentication data is obtained from a user lit with a first illumination configuration under poor ambient light conditions, and if the same user then wishes to authenticate themselves on the device in good lighting conditions, then the method may adjust accordingly the authentication data obtained using the first illumination configuration. This will improve the efficiency of the biometric unlock mechanism.

The user may be authenticated if at least a predetermined number of the derived measured values are within a predetermined range of corresponding ones of the stored measured values. Alternatively, or in addition, only measured values corresponding to particularly prominent physical features of the user may be used in the comparison (e.g. width of user's face, height or length of nose, etc.). In such cases, the margins between the measured data and the stored data may be smaller to allow for accurate authentication, as opposed to the case in which many data points derived from the captured images are compared to a corresponding number of stored data points.

The first and second illumination configurations may be selected from a plurality of pre-stored illumination configurations. This could be implemented if one knew the specific illumination configurations that would be used to illuminate the user, and attempted to circumvent the biometric unlock mechanism by using two individual photographs, each photograph being an image of the user illuminated with one of the two illumination configurations. By selecting the illumination configurations at random from a pool of pre-stored configurations, the method provides for increased access security.

The first illumination configuration may be different to the second illumination configuration with respect to one or more of: its direction of illumination relative to the at least a portion of the user, its angle of illumination relative to the at least a portion of the user, its intensity, its colour, and its pattern. For example, the first illumination configuration may comprise a particular pattern, such as a plurality of light and dark bands, when illuminating the user, whilst the second illumination configuration may take the form of a single solid band of light. Alternatively, or in addition, one illumination configuration may illuminate a user's face from below, or from the left/right side, whilst the other may illuminate the user's face from above, or (correspondingly) the right/left side.

By using the display screen to illuminate the user's face from multiple lighting angles, a three-dimensional image can be created using only a single sensor. By then measuring the difference between the shadows cast by the user's face under the different lighting conditions afforded by the different illumination configurations, a three-dimensional image can be created, resulting in a more robust biometric image that may be used for authentication purposes.

The first and second illumination configurations may comprise optical illumination or audio illumination, and the sensor may be a camera or a microphone, respectively. In some embodiments, the optical illumination may comprise infra-red illumination, but typically comprise visible light.

In a fourth aspect of the present invention, there is provided a device for authenticating a user. The device comprises one or more emitters, a sensor, and logic. The logic is configured to cause the one or more emitters to illuminate at least a portion of a user with a first illumination configuration (or pattern, for example). The logic is further configured to cause the sensor to capture a first image of the at least a portion of the user illuminated with the first illumination configuration. The logic is still further configured to cause the one or more emitters to illuminate the at least a portion of the user with a second illumination configuration different to the first illumination configuration. The logic is yet still further configured to cause the sensor to capture a second image of the at least a portion of the user illuminated with the second illumination configuration, and, finally, determine whether to authenticate the user based on the first and second captured images.

The device may be a mobile device, such as a mobile telephone, a laptop computer, a personal digital assistance, etc. In some embodiments, the mobile device need not be easily portable, and, for example, could be a desktop or laptop computer. The sensor may comprise at least one of an optical sensor, a camera, an audio sensor, and a microphone.

The logic may be further configured to derive authentication data from the captured first and second images, for example as described above.

The device may be configured to transition from a locked state to an unlocked state upon successful authentication of the user. For example, when a user wishes to access the device either when the device is first powered up or else if the device has remained inactive for a certain period of time, the device may activate the authentication process described above before allowing the user access. If the user fails to be successfully authenticated after a predetermined number of attempts, then the device may permanently lock itself, or may self-destruct, etc. Alternatively, the device may revert to other conventional authentication procedures such as validation against a PIN.

The device may comprise a display screen configured to display a guide pattern for assisting alignment of the at least a portion of the user relative to the one or more emitters. The guide pattern may comprise an elliptical or circular guide line that allows a user to align their face relative to the display screen. The guide pattern allows measured values derived from captured images taken during the "authentication" phase to correspond to stored values derived from captured images taken during the "learning" phase. This improves the comparison that may be carried out between the two sets of measured values, when determining whether to authenticate the user or not.

The one or more emitters may form part of respective portions of a display screen of the device. In one particular embodiment, a first emitter forms part of the topmost half of the display screen, and thus the user's face may be illuminated from above by a first illumination configuration. A second emitter forms part of the bottommost half of the display screen, and thus the user's face may then be illuminated from below by a second, different illumination configuration.

The different illumination configurations or patterns may be achieved using the display screen of the device equipped with a front facing camera (i.e. a camera on the same side as the screen). Preferably, the device is a mobile telephone, computer, tablet computer or portable computer.

In a fifth aspect of the present invention, there is provided a computer-readable medium for storage on a mobile device. The computer-readable medium comprises executable code configured such that, when executed on a computer, the code will perform any of the above-described methods. The code may be stored on any suitable medium, such as a flash drive, a CD-ROM, a hard disk, etc., or may be sent as a signal.

It should be noted that any feature described above may be used with any particular aspect or embodiment of the invention.

### Brief Description of the Drawings

Several embodiments of the present invention will now be described by way of example and with reference to the following drawings, in which:
Figure 1 is a schematic view of a mobile device displaying a face alignment guide, in accordance with a preferred embodiment of the present invention;
Figure 2 is a schematic view of the mobile device of Figure 1, emitting a first illumination configuration;
Figure 3 is a schematic view of the mobile device of Figure 1, emitting a second illumination configuration;
Figure 4 is a schematic view of the mobile device of Figure 1, emitting a third illumination configuration;
Figure 5 is a flow diagram illustrating the steps taken by a method of deriving authentication data, according to an embodiment of the invention; and
Figure 6 is a flow diagram illustrating the steps taken by a method of authenticating a user, according to an embodiment of the invention.

### Detailed Description of a Preferred Embodiment

Whilst various embodiments of the present invention are described below, the invention is not limited to these embodiments and variations of these embodiments may well fall within the scope of the invention which is to be limited only by the appended claims.

The present invention is generally directed to a method of operation of a mobile device to trigger a "biometric scan" using a series of short screen flashes, with differing screen lighting configurations. Images of the user illuminated with these lighting configurations or patterns (e.g. illumination configurations) are captured using a high-definition, front-facing camera. Using this method, the device is able to capture a three-dimensional image of the user's face, by abstracting differences between the different lighting conditions. This allows a relatively robust "biometric unlock" key to be provided. This biometric unlock key, feature, or mechanism, is difficult to circumvent without a three-dimensional rendition of the user's face as it is the three-dimensional nature of the user's face that gives rise to different captured images with different illumination configurations. The invention may use existing single-camera mobile devices, where the camera is aligned on the front face of the device, next to a standard backlit display.

According to a preferred embodiment of the invention, a method of authenticating a user relies on two separate operating states: an initial "learning" state and a "triggered unlock" state.

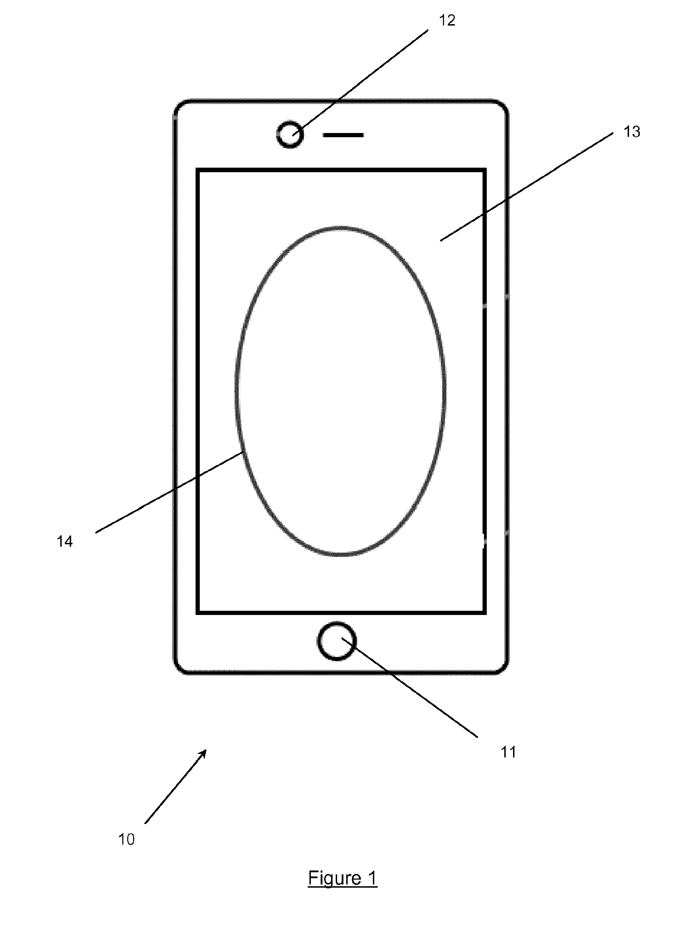

As seen in Figure 1, there is provided mobile device 10 comprising activator 11, video camera 12 and display screen 13. Mobile device 10 also comprises a processor and memory (not shown) for carrying out various processes and functions in mobile device 10, and for storing data for later use. The memory stores instructions for running a biometric authentication and unlock mechanism of mobile device 10, and the processor is arranged to read and execute these instructions. The device may comprise any suitable operating system for operating the software, such as Android, BSD, iOS, Windows, etc.

In order to teach the biometric unlock mechanism those physical features of the user's face to look for, there is a need for mobile device 10 to "learn" the face of the individual. This state is triggered when the user requests a new biometric protection layer to be added to mobile device 10, through standard device menus and configuration options. For example, the user could download an application which, when installed on mobile device 10, allows the user to launch the biometric unlock mechanism.

Once the user has selected the option to "learn" a biometric unlock pattern, mobile device 10 will activate front-facing camera 12, and present the user with a preview of their own face. Overlaid on this image, mobile device 10 presents guide line 14 for the user to align their face correctly, to ensure the proper alignment of the user's face relative to display screen 13. In a preferred embodiment, an image of the user's entire face is fit within the boundaries of guide line 14.

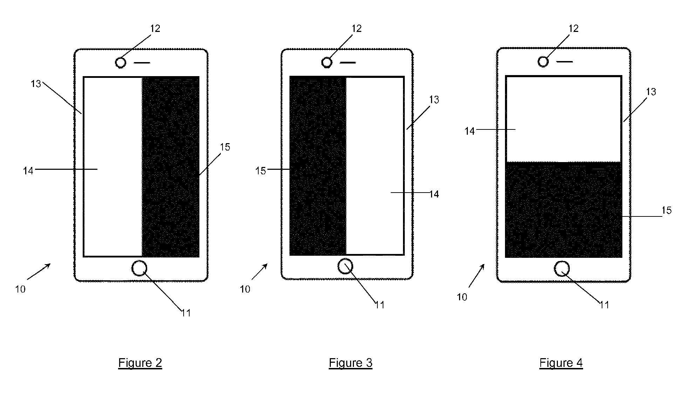

Once mobile device 10 has detected that the user's face is properly aligned (through basic pattern matching and recognition), mobile device 10 prompts the user to remain steady, and replaces the display contents with three illumination configurations (Figure 2 to 4). In the first illumination configuration seen in Figure 2, the left half of display screen 13 is lit whilst is right half is unlit. In the second illumination configuration seen in Figure 3, the left half of display screen 13 is unlit whilst is right half is lit. In the third illumination configuration seen in Figure 4, the top half of display screen 13 is lit whilst is bottom half is unlit.

These flashes of light are designed to illuminate the user's face with varying positions of light - one from each side on the horizontal plane, and one from the top. Whilst the user's face is illuminated, mobile device 10 captures the input from front-facing camera 12 for each illumination configuration.

Once the face has been illuminated in this pattern, mobile device 10 is able to derive data (e.g. authentication data) by synthesising a combined set of data based on the differences between the scans. Using a "clean" capture of the user's face, device 10 creates a network of nodes on key facial features (corners of the eye, corners of the mouth, tip of the nose, position of the ears, temples, nostrils and eyebrows). Alongside this, a delta of shadows cast by the user's features, when illuminated from the sides and from above, will be stored alongside the standard biometric data. These shadows will be abstracted to a series of simplified measures (such as nose length, eye depth, etc), for rapid acquisition and recognition. This data is then stored in the persistent memory on mobile device 10.

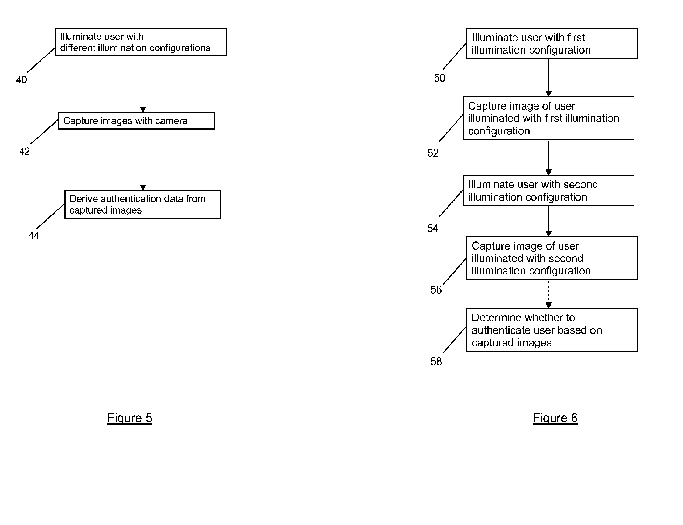

Figure 5 illustrates the steps taken by mobile device 10 in order to derive authentication data, in accordance with the above embodiment. In step 40, the user is illuminated with a plurality of different illumination configurations. In step 42, for each illumination configuration, front-facing camera 12 captures an image of the user. In step 44, the processor of mobile device 10 derives authentication data from the captured images.

When the user has configured mobile device 10 to use the biometric unlock mechanism, mobile device 10 operates as normal, and can be locked using the standard hardware or software trigger.

When mobile device 10 is activated and brought out of sleep mode (or booted for the first time), for example by using activator 14, the biometric authentication mechanism engages. Front-facing camera 12 of mobile device 10 turns on, scanning every half second for a recognisable face. At this time, the user is presented with guide line 14 overlaid over the live video image, as per Figure 1.

When a face is recognised (e.g. when mobile device 10 determines that a face is present within the boundaries of guide line 14), mobile device 10 prompts the user to remain steady, and flashes a series of illumination patterns or configurations matching those which were fired during the "learning" phase (Figures 2 to 4). During this time, the input from front-facing camera 12 is recorded.

Using the same method as in the "learning" step, above, a series of biometric measures and statistics are gathered from the input. By adding a "variance weighting" to each measurement, the system may compensate for varying ambient lighting conditions and movement of the user's face.

By comparing the initially captured biometric vectors and measurements to the weighted scanned measurements, mobile device 10 may authenticate the user and in so doing may unlock mobile device 10, assuming the characteristics or parameters of the new if they match (or are within a suitable range of one another). Alternatively, mobile device 10 remains locked if enough variance between the characteristics is present.

After a number of failed attempts, or after the user manually selects to skip this process, the device will fall back to a secondary unlock method, such as a traditional password or PIN mode. The number of retries or the possibility to fall back altogether is configurable in the device settings and configuration menus.

Figure 6 illustrates the steps taken by mobile device 10 in order to authenticate (or not) the user. In step 50, the user is illuminated with a first illumination configuration. In step 52, front-facing camera 12 captures an image of the user illuminated with the first illumination configuration. In step 54, the user is illuminated with a second illumination configuration (different to the first illumination configuration). In step 56, front-facing camera 12 captures an image of the user illuminated with the second illumination configuration. This process can repeat (e.g. the user can be illuminated with a third illumination configuration, different to the first and second illumination configurations). In step 58, the processor of mobile device 10 determines whether to authenticate the user based on the captured images.

Many combinations, modifications, or alterations to the features of the above embodiments will be readily apparent to the skilled person and are intended to form part of the invention. Furthermore, a person skilled in the art will recognise that any of the features described as specifically relating to one embodiment may be used in any other embodiment, by making the appropriate changes.

## Claims

1. A method of authenticating a user in order to enable access to a securable device including:
selecting an illumination configuration from a plurality of predetermined illumination configurations;
illuminating at least a part of the user in a manner corresponding to the selected illumination configuration;
capturing an image of at least a portion of the illuminated user; and
determining whether to authenticate the user based on the captured image.

2. The method of claim 1 wherein the selected illumination configuration is associated with a predetermined image of the user illuminated according to the illumination configuration, and the user is authenticated where the captured image substantially corresponding to the predetermined image of the user.

3. The method of claim 2 wherein determining whether to authenticate the user includes:
deriving data points at one or more given coordinate locations in the captured image; and
comparing the derived data points with corresponding coordinate locations in the predetermined image corresponding to the selected illumination configuration.

4. The method of any one preceding claim wherein the selected illumination configuration is selected at random from the plurality of predetermined illumination configurations.

5. The method of any one preceding claim wherein selecting the illumination configuration comprises selecting at least two images from the plurality of predetermined illumination configurations, and the method further includes:
illuminating at least a part of the user in a manner corresponding to the at least two selected illumination configurations;
capturing images of at least a portion the user for each of the selected illumination configurations; and
determining whether to authenticate the user based on the at least two captured images.

6. A securable device configured to authenticate a user before enabling access to the securable device, the securable device including:
a store containing a plurality of predetermined illumination configurations;
an illumination arrangement;
a sensor; and
an authentication processing arrangement configured to:
select an illumination from the plurality of predetermined illumination configurations;
control the illumination arrangement to illuminate at least a part of the user in a manner corresponding to the selected illumination configuration;
control the sensor in order to capture an image of the at least a portion of the illuminated user; and
determine whether to authenticate the user based on the captured image.

7. The securable device of claim 6 wherein the store additionally includes a plurality of predetermined representations of the user corresponding to each of the plurality of predetermined illumination configurations.

8. The securable device of claim 7 wherein the authentication processing arrangement is configured to authenticate the user upon the captured image substantially corresponding to the predetermined image of the user illuminated according to the selected illumination configuration.

9. The securable device of any one of claims 6 to 8 wherein the authentication processing arrangement is configured to determine whether to authenticate the user by:
deriving data points at one or more given coordinate locations in the captured image; and
comparing the derived data points with corresponding coordinate locations in the predetermined image corresponding to the selected illumination configuration.

10. The securable device of claim 9 wherein the data points derived by the authentication processing arrangement correspond to:
- points with a given illumination intensity; or
- physical measures of the user, such as a distance between the eyes of the user, the height of the user's nose or the distance between the corners of the user's mouth;

11. The securable device of any one of claims 6 to 10 wherein the authentication processing arrangement is configured to select an illumination configuration at random from the plurality of predetermined illumination configurations.

12. The securable device according to any one of claims 6 to 11 wherein the authentication processing arrangement is further configured to:
select at least two images from the plurality of predetermined illumination configurations,
control the illumination arrangement to illuminate the user in a manner corresponding to the at least two selected illumination configuration;
control the sensor in order to capture images of the use for each of the user illumination configurations; and
determine whether to authenticate the user based on the at least two captured image.

13. The securable device according to any one of claims 6 to 12 wherein the sensor includes a camera or a photosensitive detector and the selected illumination configuration is an optical illumination.

14. The securable device according to any one of claims 6 to 13 wherein the sensor includes a microphone and the selected illumination configuration is an audio illumination.

15. The securable device according to any one of claims 6 to 14 further including a locking mechanism configured to transition the device from a locked state to an unlocked state upon receiving a positive authentication of the user.
